**Europäisches Patentamt**

**European Patent Office**

**Office européen des brevets**

(19)

(11) Veröffentlichungsnummer: **0 177 018 B1**

# (12) EUROPÄISCHE PATENTSCHRIFT

(45) Veröffentlichungstag der Patentschrift: **13.05.92**

(21) Anmeldenummer: **85112421.4**

(22) Anmeldetag: **01.10.85**

(51) Int. Cl.⁵: **H04B 3/46**, H04L 1/08, H04Q 9/00, G08C 25/00, H04L 12/26

(54) **Verfahren zur Übermittlung von Daten.**

(30) Priorität: **04.10.84 DE 3436435**

(43) Veröffentlichungstag der Anmeldung:
**09.04.86 Patentblatt 86/15**

(45) Bekanntmachung des Hinweises auf die
Patenterteilung:
**13.05.92 Patentblatt 92/20**

(84) Benannte Vertragsstaaten:
**AT BE CH DE FR GB IT LI NL SE**

(56) Entgegenhaltungen:
**EP-A- 0 046 937          EP-A- 0 177 019**
**DE-A- 2 823 836          DE-A- 2 827 418**
**DE-A- 2 832 311          DE-A- 3 110 590**
**US-A- 3 693 155**

(73) Patentinhaber: **SIEMENS AKTIENGESELL-
SCHAFT**
**Wittelsbacherplatz 2**
**W-8000 München 2(DE)**

(72) Erfinder: **Herkert, Hans, Dipl.-Ing.**
**Kurzweg 3**
**W-8021 Hohenschäftlarn(DE)**
Erfinder: **Timmermann, Uwe, Dipl.-Ing. (FH)**
**Fürstenackerstrasse 41**
**W-8000 München 71(DE)**

EP 0 177 018 B1

**Beschreibung**

Die Erfindung bezieht sich auf ein wie im Oberbegriff des Patentanspruchs 1 angegebenes Verfahren.

Ein derartiges Verfahren ist bereits aus der DE-OS 31 10 590 bekannt. Das bekannte Verfahren steht im Zusammenhang mit einem Fernwirknetz mit Baumstruktur.

Fernwirk- und Signalerfassungssysteme mit Baumstruktur und mehreren Ebenen können prinzipiell durch Systeme mit nur zwei Ebenen, gebildet durch eine Zentralstation und Unterstationen, ersetzt werden. Mehrebenensysteme haben insbesondere dann Vorteile vor dem Zweiebenensystem, wenn in den Knoten eine Datenreduktion stattfindet. Dies kann dadurch geschehen, daß die Daten in den Knoten vorverarbeitet oder gefiltert werden. Damit kann aber die Funktionsweise der Anlage auch bei einwandfreiem Betrieb schwer durchschaubar und ihre Kontrolle erschwert werden.

Man kann in den Knoten des Mehrebenen-Netzes eine Datenreduktion durch Datenverarbeitung vornehmen. Eine vergleichsweise einfache Form der Datenvorverarbeitung ist der Alt-Neu-Vergleich. Dabei sendet der Computer in den Knotenstellen dann den ganzen von ihm verwalteten Datenstrom aus, wenn sich irgendein Signalzustand geändert hat. Anschließend wird der neue Signalzustand quittiert und zum Altzustand erklärt. Dieses einmalige Aussenden eines Datenstromes bei einer Signaländerung führt allerdings dazu, daß bei einer Störung des Datenblockes die Signaländerung verloren geht. Es müssen also zur sicheren Datenübertragung besondere Verfahrensschritte, z.B. komplizierte Hand-shakings zwischen den Ebenen eingeführt werden.

Noch komplizierter wird die Anlage, wenn in den Knoten eine höhere Datenverarbeitung z.B. Unterdrückung von Folgemeldungen durchgeführt wird oder die Versorgungsspannung ausfällt oder Reparaturarbeiten vorgenommen werden.

Aus der DE-A-2 832 311 ist bereits ein Verfahren zur Informations-Gehalt-Erhöhung bei der Übertragung von Nachrichten bekannt, bei dem eine Menge zu übertragender Daten dadurch vorverarbeitet wird, daß eine Meßwertinformation in eine Zahl sich teilweise überlappender Anteile mit verschiedener Wertigkeit unterteilt wird, z.B. in einem Grob- und einen Feinteil. Diese Anteile werden durch unterschiedliche Identifikationsmerkmale ergänzt. Zur Meßwertübertragung wird zunächst der momentane Grobanteil gesendet. Bei den folgenden Übertragungszyklen wird gegebenenfalls die Differenz zwischen Grob- und Istwert als Feinmeßwert-Inkrement gebildet und ergänzt durch ein Identifikationsbit gesendet. Die Empfangsstation addiert den Inkrementwert zum gespeicherten Grobwert. Bei entsprechenden Anforderungen an die Zuverlässigkeit der Meßwertübertragung ist eine zusätzliche periodische Grobwertübertragung vorgesehen.

Überlegungen im Rahmen der Erfindung haben ergeben, daß ein besonders transparenter Arbeitsbetrieb für eine am Stamm eines Netzes mit Baumstruktur angeschaltete Datenverarbeitungsanlage dann gegeben ist, wenn sie ständig die Daten aus dem Netz in nicht vorverarbeiteter Form erhält und daß hierbei eine wesentliche Datenreduktion möglich ist, wenn für die zu übertragenden Daten ein geeigneter Bezugsinhalt gegeben ist, der einem besonders wahrscheinlichen Dateninhalt entspricht oder einem solchen nahekommt.

Aufgabe der Erfindung ist es, ein Verfahren der eingangs genannten Art zu schaffen, das es gestattet, in einer Datenübermittlungseinrichtung zu übermittelnde Daten durch eine Datenreduktion so aufzubereiten, daß eine Empfangsstelle die Daten mit ihrem ursprünglichen Informationsinhalt, d.h. ohne Datenvorverarbeitung oder Datenfilterung erhält. Insbesondere soll die Empfangsstelle dabei in der Lage sein, die Daten in ihrer ursprünglichen Form zu rekonstruieren.

Gemäß der Erfindung wird das Verfahren zur Lösung dieser Aufgabe in der im kennzeichnenden Teil des Anspruchs 1 angegebenen Weise ausgebildet. Durch diese Maßnahmen ergibt sich der Vorteil, daß die Anforderungen an die Übertragungskapazität der Datenleitung besonders gering sind. Die Datenempfangsstelle, insbesondere gebildet durch eine Datenverarbeitungsanlage, die an den Stamm des Mehrebenennetzes angeschlossen ist, ist mit den nicht reduzierten Rohdaten besonders gut mit Information versorgt. In Signalerfassungs-Systemen, in denen viele Signale zur Fehlermeldung, aber wenige Fehlermeldungen vorliegen, läßt sich auf die angegebene Weise der Datenfluß über die Knotenstellen stark reduzieren. Dies ist insbesondere in Signalerfassungseinrichtungen zur zentralen Betriebsbeobachtung von Nachrichtenübertragungseinrichtungen der Weitverkehrstechnik der Fall, da dort im allgemeinen ein sehr großer Teil, z.B. über 95 % der überwachten Anlage störungsfrei arbeitet.

Vorteilhafte Ausgestaltungen des Verfahrens ergeben sich aus den Unteransprüchen. Bei der Weiterbildung nach Anspruch 3 ergibt sich der Ort der auf das Datensteuersignal folgenden x Datenbytes aus der Formel $\binom{x}{y}$, wobei y die Gesamtzahl aller möglichen Bytes ist.

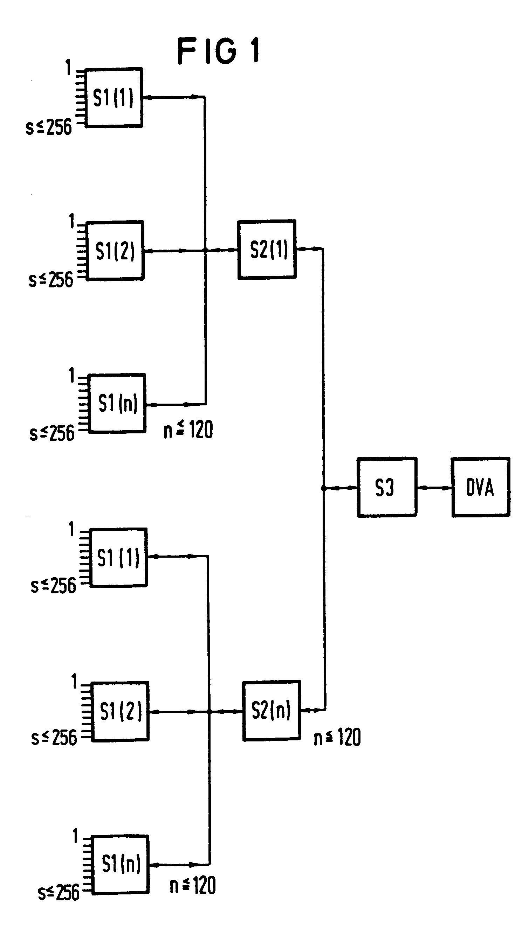

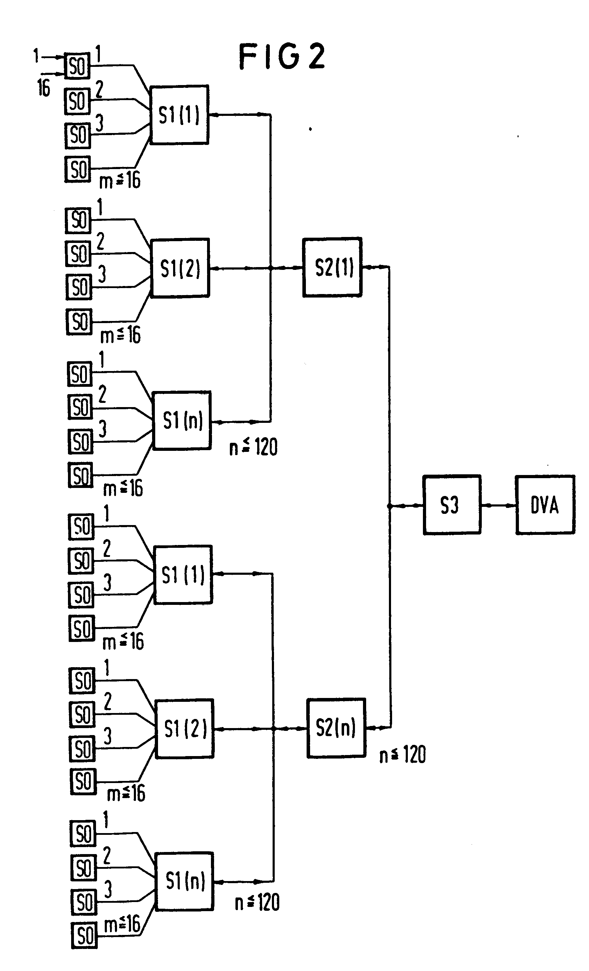

Die Erfindung wird anhand der in den Figuren 1 und 3 bis 7 dargestellten Ausführungsbeispiele sowie anhand des Datenblocks nach Fig. 2 näher erläutert.

Es zeigen

Fig. 1 und 2    jeweils eine örtliche Signalerfassungseinrichtung mit einem Datennetz mit Baumstruktur und mit Stationen in mehreren Netzebenen. Dabei ist nach

Fig. 1    den Stationen einer ersten Netzebene jeweils eine noch nicht aufgeteilte Menge von Daten zugeführt. Nach

Fig. 2    sind an die Stationen einer ersten Netzebene jeweils mehrere Datengeber angeschlossen. In

Fig. 3    ist ein Impulstelegramm dargestellt, das von Stationen des Datennetzes nach Fig. 1 ausgesendet wird. In diesem Impulstelegramm ist keine Datenreduktion vorgesehen. Ferner zeigen

Fig. 4    einen Datenblock einer Station der ersten Netzebene mit Möglichkeit der Datenreduktion,

Fig. 5    einen Datenblock einer Station der zweiten Netzebene mit Möglichkeit der Datenreduktion,

Fig. 6    einen Datenblock einer Station der dritten Netzebene zur Datenverarbeitungsanlage mit Möglichkeit der Datenreduktion,

Fig. 7    einen Datenblock einer Station der zweiten Netzebene mit Möglichkeit der Datenreduktion und mit Eigenüberwachung.

Fig. 1 zeigt eine Signalerfassungseinrichtung mit einem Datennetz von Baumstruktur. Die Stationen sind in mehrere Netzebenen angeordnet. An die Datenverarbeitungsanordnung DVA ist die Station S3 der dritten Netzebene angeschlossen. An die Stationen S3 sind die Stationen S2(1) bis S2(n) angeschlossen, von denen in der Figur nur die Stationen S2(1) und S2(n) gezeigt sind. Die Zahl der Stationen der zweiten Netzebene kann z.B. n ≤ 120 sein.

An die Stationen S2(1) und S2(n) der zweiten Netzebene sind jeweils mehrere Stationen S1(1) bis S1(n) angeschlossen, von denen in der Figur jeweils nur die Stationen S1(1), S1(2) und S1(n) gezeigt sind. Die Zahl der Stationen der ersten Netzebene, die jeweils an eine Station der zweiten Netzebene angeschlossen sind, kann z.B. ebenfalls n ≤ 120 sein.

Jede Station der ersten Netzebene hat Eingänge einer Menge von n ≤ 256 Einbit-Eingangssignalen.

Die in Fig. 2 gezeigte Signalerfassungseinrichtung stimmt mit der nach Fig. 1 weitgehend überein. Die einzige Abweichung besteht darin, daß nach Fig. 2 an jede Station der ersten Netzebene mehrere Signalgeber S0(1) bis S0(m) angeschlossen sind, von denen jeweils nur die Signale S0(1), S0(2), S0(3) und S0(m) dargestellt sind. Die Zahl der an eine Station der ersten Netzebene angeschlossenen Signalgeber beträgt z.B. m ≤ 16. Jeder Signalgeber umfaßt z.B. 16 Ein-Bit-Signalquellen.

Bei dem Datennetz nach Fig. 1 bzw. Fig. 2 sind die Stationen jeweils über Busleitungen, die vorzugsweise im Halbduplexbetrieb betrieben werden, verbunden. Am Stamm bzw. Kopf des Netzes befindet sich die Station S3, an den Ausläufern liegen die Signalgeber. Die Stationen der ersten und zweiten Netzebene befinden sich jeweils an einem Knoten des Datennetzes.

Nach Fig. 2 sind die Signalgeber jeweils an einem eigenen Eingang der zugeordneten Station der ersten Netzebene angeschlossen. Die weiteren Stationen sind über Busleitungen miteinander verbunden.

Abweichend von der in Fig. 1 und 2 gezeigten Netzstruktur können gegebenenfalls anstelle der Busleitungen sternförmige Netzkonfigurationen treten.

Die in den Figuren 1 und 2 gezeigten Signalerfassungseinrichtungen erfassen Einzelsignale. Diese Einzelsignale geben insbesondere den Zustand von Geräten oder Gerätefunktionen einer hinsichtlich ihres Betriebszustandes überwachten Einrichtung oder Anlage an. Dies ist im beschriebenen Beispiel eine Endstelle einer Nachrichtenübertragungseinrichtung.

Im Idealzustand herrscht störungsfreier Betrieb und alle Signalquellen haben den Zustand log 0. Tritt an irgendeiner Stelle der überwachten Einrichtung ein Fehler auf, so wird dies durch eine log 1 gemeldet. Im allgemeinen werden keine oder nur sehr wenige Einzelsignale den Zustand log 1 annehmen. Als Bezugsinhalt der zu übertragenden Information dient daher ein Datenfeld, bei dem alle Bit die log 0 haben. Dieser Bezugsinhalt entspricht dem wahrscheinlichsten Zustand oder stellt einen Zustand dar, der dem wahrscheinlichsten Zustand in einfacher Weise nahekommt.

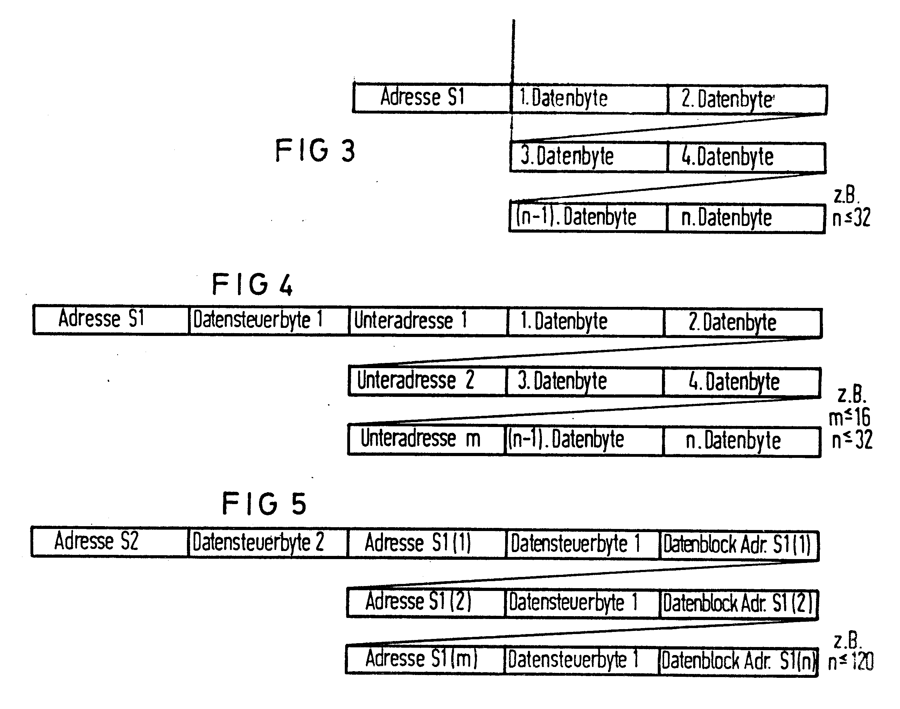

Entsprechend Fig. 3 bestehen die Datenblöcke, die von den untersten Knoten des in mehreren Ebenen aufgebauten Signalerfassungssystems bzw. von den Stationen der ersten Netzebene gesendet werden, aus einem Adressenfeld mit mehreren Bytes, einem Stammfeld bzw. Datensteuersignal mit mehreren Bytes und einem Informationsfeld mit sehr vielen Bytes. Die Bytes im Informationsfeld werden in Untermengen eingeteilt, z.B. in 2 Bytes pro Untermenge. Jeder Untermenge wird eine Unteradresse in Form eines zusätzlichen Bytes gegeben.

Die Daten werden dadurch ohne eigentliche Vorverarbeitung reduziert, daß nur noch diejenigen Untermengen im Informationsfeld ausgesendet werden, die eine oder mehrere log 1 in ihren Informationsbytes haben. Im Steuerbyte des Steuerfeldes wird der Datensenke mitgeteilt, wieviel Untermengen folgen, die wenigstens eine log 1 haben.

Fig. 2 zeigt zum Vergleich, wie ein entsprechender Datenblock ohne Datenreduktion beschaffen sein würde.

Die Unteradresse gibt jeweils an, wo der Alarmzustand liegt.

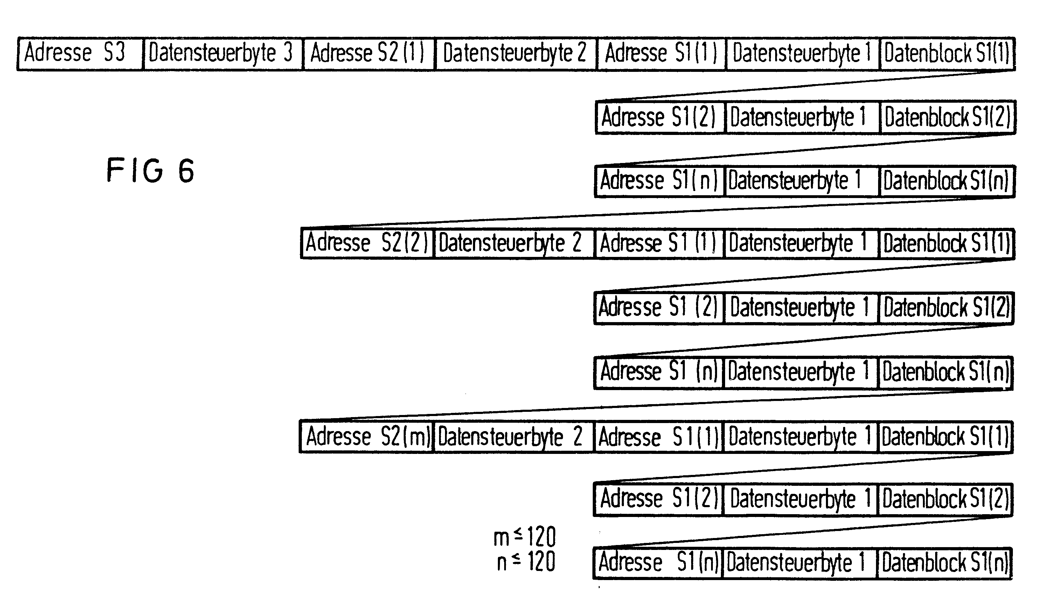

Fig. 6 zeigt einen Datenblock, der von einer Station S3 der dritten Ebene ausgesendet wird. Der von einem Knoten bzw. von einer Station der dritten Netzebene ausgesendete Datenblock besteht nur aus einem Adressenfeld für die eigene Adresse, einem Steuerfeld, das angibt, wie viele Knoten bzw. Stationen der zweiten Ebene mit einem Sekundär-Datenblock vertreten sind und die Sekundär-Datenblöcke der Stationen der zweiten Ebene, die jeweils entsprechend Fig. 5 aufgebaut sind.

Der erste Eindruck, den man beim Vergleich der Figuren 3 und 4 gewinnt, geht dahin, daß nach Fig. 4 zusätzlich Unteradressen übertragen werden müssen und somit keine Datenreduktion, sondern eine Datenvermehrung stattfindet. Berücksichtigt man jedoch, daß von den in Fig. 4 gezeigten, vorgesehenen Untermengen nur solche Untermengen wirklich übertragen werden, die wenigstens eine log 1 enthalten, so zeigt sich die erzielte Datenreduktion.

Der von einem Knoten bzw. von einer Station der zweiten Netzebene ausgesendete Datenblock besteht entsprechend Fig. 5 nur aus einem Adressenfeld für die eigene Adresse, einem Steuerfeld, das angibt, wie viele Knoten bzw. Stationen S1 der ersten Ebene einen Adressenzustand haben bzw. mit einem Primär-Datenblock vertreten sind; dann folgen für die Knoten bzw. Stationen der ersten Ebene jeweils ein Primär-Datenblock, bestehend aus der Adresse, ein Steuerfeld, das angibt, wie viele Untermengen einen Alarmzustand haben und die betreffenden Untermengen mit vorangestellter Unteradresse.

Zweckmäßigerweise dienen als Unteradressen die Adressen der Stationen bzw. Signalgeber S0(1) ... S0(m) nach Fig. 2. Bei der Signalerfassungseinrichtung nach Fig. 1 werden die Untermengen von den Stationen der ersten Netzebene mit Unteradressen versehen.

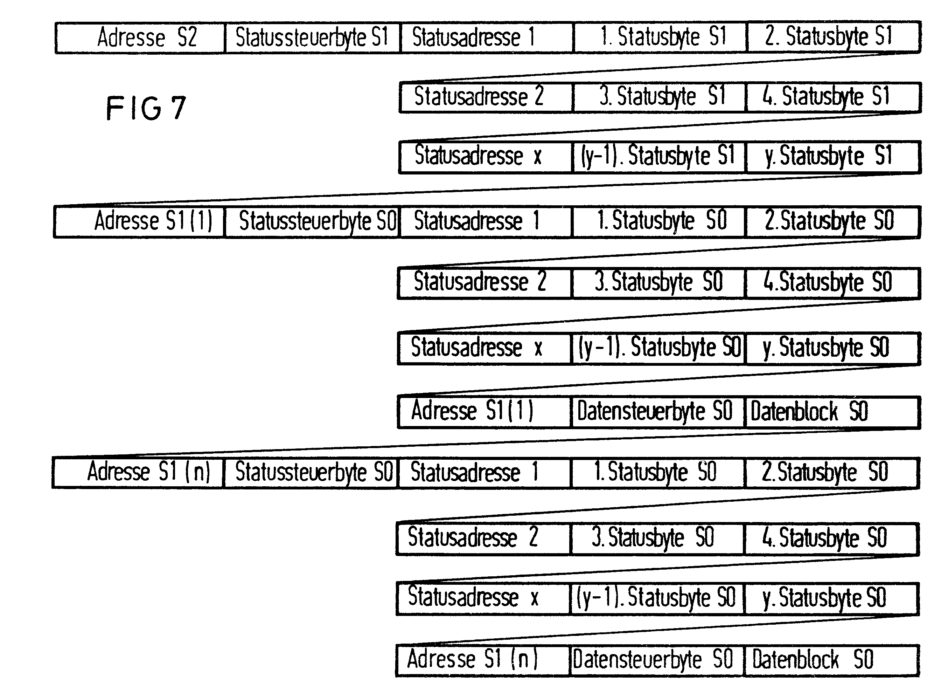

Fig. 7 zeigt einen Datenblock, der von einer Station S2 der zweiten Netzebene nach einer Station S3 der dritten Netzebene übertragen wird, und zwar mit Datenreduktion und Eigenüberwachung. Dabei ist y = n/8.

Bei Datenreduktion sind unter den einzelnen Adressen die Status- und Signal-Steuerbytes eingefügt. Sind alle Signalsammler S1 und alle Signalgeber S0 vorhanden und keine Signale im Alarmzustand, so besteht der Datenblock nur aus drei Bytes, das sind 1,4 % des Datenblockes ohne Datenreduktion.

Weitere Einzelheiten der in der Signalerfassungseinrichtung nach Fig. 1 bzw. 2 übertragenen Datenblöcke sind in den Figuren 3 bis 7 angegeben.

Die Signalsammler sind insbesondere Microcomputer. Beispielsweise sendet ein Signalsammler S1 960 Signale, das sind 120 Bytes, zum Signalsammler S2. An den Kopf fügt er seine eigene Adresse an. Der Signalsammler S1 sendet ständig in regelmäßigem Abstand oder auf Abfrage zum Signalsammler S2 die 120 Bytes. Dadurch ist der Signalsammler S2 immer über den neuesten Signalzustand informiert.

Bei den Signalsammlern S1 werden die 120 Bytes in Untermengen eingeteilt, z.B. zu je zwei Bytes. Jede Untermenge erhält ein Adreßbyte. Am Kopf des Datenblockes nach dem Adreßbyte des Computers folgt ein Steuerbyte, das die Anzahl der Untermengen angibt, in denen ein oder mehrere Bits die log 1 haben.

Hat im Computer kein Signal einen Alarmzustand, so haben auch alle Bits des Datenblockes die log 0. Der Computer braucht also nur seine eigene Adresse und ein Steuerbyte mit der binären Zahl 0 aussenden, um den ebenfalls durch einen Computer gebildeten Signalsammler S2 voll über den Zustand der Signale zu informieren.

Haben im Signalsammler S1 die Untermengen 10 und 23 irgendwelche Alarmzustände, so besteht der auszusendende Datenblock aus dem Adreßbyte des Signalsammlers S1, dem Steuerbyte mit der binären Zah1 2 und die beiden Untermengen mit den Adressen 10 und 23, also aus insgesamt 8 Bytes statt 121 Bytes. Damit ist der Signalsammler S2 voll über den Zustand der Signale in den 120 Bytes unterrichtet.

Haben jedoch alle Untermengen irgendwelche Alarmmeldungen, so verlängert sich der Datenblock infolge der Adreßbytes der Untermengen um 50 %. Dies sollte jedoch ein Ausnahmezustand sein. Aber auch hier kann eine Verbesserung dadurch erreicht werden, daß dem Signalsammler S2 über das Steuerbyte mitgeteilt wird, daß im folgenden Datenblock die Untermengen mit ihren Unteradressen aufgelöst sind und der Datenblock in normaler Reihenfolge der Bytes eintrifft.

Die Datenreduktion ohne Datenvorverarbeitung in den Knoten des Mehrebenen-Netzes geben diesem Netz einen wesentlichen Vorteil gegenüber dem Zweiebenennetz, da sie besonders bei großen Signalmengen die Änderung eines Signalzustandes schneller übertragen können. Ein Vierebenennetz überträgt eine Signaländerung etwa fünfmal so schnell wie ein Zweiebenennetz.

Die Bildung von Untermengen mit ihren Unteradressen geschieht in den Knoten eines Netzes automatisch, denn jeder Knoten verwaltet mehrere Unteradresen mit einer bestimmten Menge von Signalen und sendet diese Unteradressen mit seiner eigenen Adresse an der Spitze des Datenstromes an die nächst höhere Ebene. Dadurch läßt sich im Mehrebenennetz die Reduktion der Daten mit Hilfe von Steuerbytes besonders einfach durchführen.

Neben den Adressen mit ihren Datenbytes gibt es noch Statusadressen mit ihren Statusbytes. Die Datenbytes geben die Zustände der Signale an und die Statusbytes die Zustände der Signalgeber und Knoten. Sie bilden die Eigenübrwachung des gesamten Systems.

**Patentansprüche**

1. Verfahren zur Übermittlung von Daten mit Hilfe einer Datenübermittlungseinrichtung,wobei wenigstens eine Station von Zeit zu Zeit eine Menge zu übermittelnder Daten jeweils aufbereitet und in der aufbereiteten Form als Datenblock weitergibt,
**dadurch gekennzeichnet,**
daß in der Station von der in eine vorgegebene Zahl von Untermengen aufgeteilten Menge der zu übermittelnden Daten zur Datenreduktion diejenigen Untermengen unterdrückt werden, deren Informationsinhalt mit einem vorgegebenen Bezugsinhalt übereinstimmt, der einem wahrscheinlichen Dateninhalt entspricht und daß die von der Station abgegebenen Datenblöcke die Adresse der Station, ein Datensteuersignal und die bei der Datenreduktion verbliebenen Untermengen enthalten und daß das Datensteuersignal und gegebenenfalls den Untermengen beigefügte Datensteuersignale Informationen über die Zahl und Zuordnung der auf das Datensteuersignal folgenden Untermengen enthält.

2. Verfahren nach Anspruch 1,
**dadurch gekennzeichnet,**
daß die Untermengen jeweils durch ihre Adresse ergänzt sind und daß das Datensteuersignal eine Information über die Zahl der auf das Datensteuersignal folgenden adressierten Untermengen enthält.

3. Verfahren nach Anspruch 1,
**dadurch gekennzeichnet,**
daß das Datensteuersignal sowohl eine Information über die Zahl als auch über den Ort der folgenden Untermengen in einem Datenblock ohne Datenreduktion enthält.

4. Verfahren nach Anspruch 2,
**dadurch gekennzeichnet,**
daß der Datenblock eine Bytefolge mit einem Adressenfeld für die Adresse der sendenden Station, mit einem Datensteuerfeld für ein Datensteuersignal und mit einem Informationsfeld ist, das sich aus den jeweils zu übertragenden adressierten Untermengen zusammensetzt.

5. Verfahren nach einem der Ansprüche 1 bis 4,
**dadurch gekennzeichnet,**
daß die von der Station aufzubereitenden Daten von Datengebern zur Übermittlung bereitgestellt und/oder mittels der Station gewonnen werden.

6. Verfahren nach einem der Ansprüche 1, 2, 4 und 5,
**dadurch gekennzeichnet,**
daß bei einer Datenübermittlungseinrichtung, die ein Datennetz mit Baumstruktur aufweist und bei der Stationen einer Netzebene jeweils an mehrere Stationen einer niedrigeren Netzebene angeschlossen sind und bei der mindestens eine höhere Netzebene mit wenigstens einer weiteren Station vorgesehen ist, von den Stationen der höheren Netzebenen ausgesendete Datenblöcke jeweils die Adresse der sendenden Station, ein Datensteuersignal und eine Folge der von den angeschlossenen Stationen der nächst niedrigeren Netzebene empfangenen Datenblöcke enthalten und daß das Datensteuersignal eine Information über die Zahl der auf das Datensteuersignal folgenden Datenblöcke enthält.

7. Verfahren nach einem der Ansprüche 1 bis 6,
**dadurch gekennzeichnet,**
daß die Station den Betriebszustand von daran angeschlossenen Stationen der niedrigeren Ebene oder Datengebern überwacht und daß die mittels der Station gewonnenen und zu übermittelnden Daten Statussignale und Daten der von dieser Station überwachten Stationen sind.

8. Verfahren nach Anspruch 7,
**dadurch gekennzeichnet,**
daß von einer Station ausgesendete Datenblöcke im Anschluß an die Adresse der betreffenden Station zwei Datenblockteile enthalten, von denen der eine Statussignale und der andere zur Übermittlung übernommene Daten enthält und daß für beide Datenblockteile jeweils ein Steuersignal und ein Block von adressierten Untermengen vorgesehen ist.

9. Verfahren nach Anspruch 8,
   **dadurch gekennzeichnet**,
   daß bei einer Datenübermittlungseinrichtung, die ein Datennetz mit Baumstruktur aufweist und bei der Stationen einer Netzebene jeweils an mehrere Stationen einer niedrigeren Netzebene angeschlossen sind und bei der mindestens eine höhere Netzebene mit wenigstens einer weiteren Station vorgesehen ist, von den Stationen der höheren Netzebene ausgesendete Datenblöcke jeweils die Adresse der sendenden Station, ein Statussteuersignal mit zugehörigem Statusdatenblock, der auf die von der Station unmittelbar überwachten Stationen bezogen ist, und eine Folge der aneinandergereihten Datenblöcke der Stationen der nächst niedrigeren Netzebene enthält.

10. Verfahren nach einem der Ansprüche 1 bis 9,
    **dadurch gekennzeichnet**,
    daß die Daten über ein ein Datennetz mit Baumstruktur übermittelt werden, an dessen Knoten jeweils eine für Halbduplexbetrieb ausgebildete Station und an dessen Kopf eine Zentralstation mit Rechner angeordnet sind.

11. Verfahren nach einem der Ansprüche 1 bis 10,
    **gekennzeichnet durch**
    eine örtliche Erfassung von Fehler- und/oder Störungsmeldungen in einer Einrichtung zur zentralen Betriebsbeobachtung von Nachrichtenübertragungseinrichtungen.

## Claims

1. Method for transmitting data with the aid of a data transmission arrangement, in which at least one station in each case edits from time to time a set of data to be transmitted and forwards these data in the edited form as a data block, characterised in that in the station, for the purpose of data reduction, those subsets of the set of data to be transmitted, which has been divided into a predetermined number of subsets, whose information content coincides with a predetermined reference content which corresponds to a probable data content are suppressed, and that the data blocks output by the station contain the address of the station, a data control signal and the subsets remaining upon data reduction, and that the data control signal and, if necessary, data control signals attached to the subsets contain information items on the number and correlation of the subsets following the data control signal.

2. Method according to Claim 1, characterised in that the subsets are in each case completed by their address and that the data control signal contains an information item on the number of the addressed subsets following the data control signal.

3. Method according to Claim 1, characterised in that the data control signal contains both an information item on the number and on the location of the following subsets in a data block without data reduction.

4. Method according to Claim 2, characterised in that the data block is a byte sequence comprising an address field for the address of the transmitting station, comprising a data control field for a data control signal and comprising an information field which is composed of the addressed subsets to be transmitted in each case.

5. Method according to one of Claims 1 to 4, characterised in that the data to be edited by the station are provided for transmission by data transmitters and/or are obtained by means of the station.

6. Method according to one of Claims 1, 2, 4 and 5, characterised in that in a data transmission arrangement which exhibits a tree-structured data network and in which stations of one network level are in each case connected to a plurality of stations of a lower network level and in which at least one higher network level with at least one further station is provided, data blocks sent out by the stations of the higher network levels in each case contain the address of the transmitting station, a data control signal and a sequence of the data blocks received by the connected stations of the next lower network level, and that the data control signal contains an information item on the number of the data blocks following the data control signal.

7. Method according to one of Claims 1 to 6, characterised in that the station monitors the operating status of stations of the lower level or data transmitters connected to it and that the data obtained by means of the station and to be transmitted are status signals and data of the stations monitored by this station.

8. Method according to Claim 7, characterised in that data blocks sent out by a station contain, following the address of the relevant station, two data block sections, one of which contains status signals and the other one of which contains data accepted for transmission, and that in each case a control signal and a block of addressed subsets is provided for both data block sections.

9. Method according to Claim 8, characterised in that, in a data transmission arrangement which exhibits a tree-structured data network and in which stations of one network level are in each case connected to a plurality of stations of a lower network level and in which at least one higher network level with at least one further station is provided, data blocks sent out by the stations of the higher network level in each case contain the address of the transmitting station, a status control signal with associated status data block which is referred to the stations directly monitored by the station, and a sequence of the concatenated data blocks of the stations of the next lower network level.

10. Method according to one of Claims 1 to 9, characterised in that the data are transmitted via a tree-structured data network, at the nodes of which in each case a station constructed for half duplex operation is arranged and at the head of which a central station with processor is arranged.

11. Method according to one of Claims 1 to 10, characterised by a local detection of error and/or fault messages in an arrangement for centralised service observation of telecommunication arrangements.

**Revendications**

1. Procédé pour transmettre des données à l'aide d'un dispositif de transmission de données, selon lequel au moins un poste prépare respectivement, de temps à autres, une quantité de données à transmettre et les retransmet sous la forme préparée, en tant que bloc de données, caractérisé par le fait que dans le poste, des quantités partielles, dont le contenu en informations coïncide avec le contenu de référence prédéterminé qui correspond à un contenu de données probable, de la quantité, répartie en un nombre prédéterminé de quantités partielles, des données devant être transmises sont supprimées, pour l'obtention d'une réduction des données et que les blocs de données délivrés par le poste contiennent l'adresse du poste, un signal de commande de données et les quantités partielles qui subsistent lors de la réduction des données, et que le signal de commande des données et éventuellement des signaux de commande de données, annexées aux quantités partielles, contiennent des informations concernant le nombre et l'association des quantités partielles qui sont situées en aval du signal de commande de données.

2. Procédé suivant la revendication 1, caractérisé par le fait que les quantités partielles sont complétées respectivement par leur adresse et que le signal de commande de données contient une information concernant le nombre des quantités partielles adressées qui sont situées en aval du signal de commande de données.

3. Procédé suivant la revendication 1, caractérisé par le fait que le signal de commande de données contient une information concernant aussi bien le nombre que l'emplacement des quantités partielles dans un bloc de données, sans réduction des données.

4. Procédé suivant la revendication 2, caractérisé par le fait que le bloc de données est une séquence d'octets comportant une zone d'adresses pour l'adresse du poste émetteur, avec une zone de commande de données pour un signal de commande de données et une zone d'informations, qui se compose des quantités partielles adressées, devant être respectivement transmises.

5. Procédé suivant l'une des revendications 1 à 4, caractérisé par le fait que les données qui doivent être préparées par le poste, sont préparées par des générateurs de données en vue de leur transmission et/ou sont obtenues au moyen du poste.

6. Procédé suivant l'une des revendications 1, 2, 4 et 5, caractérisé par le fait que dans le cas d'un dispositif de transmission de données, qui comporte un réseau de données à structure arborescente et dans lequel des postes d'un plan du réseau sont raccordés respectivement à plusieurs postes d'un plan inférieur du réseau et dans lequel il est prévu au moins un plan supérieur du réseau comportant au moins un autre poste, des blocs de données émis par les postes des plans supérieurs du réseau contiennent respectivement l'adresse du poste émetteur, un signal de commande de données et une suite des blocs de données reçus par les postes raccordés du plan immédiatement inférieur du réseau, et que le signal de commande de données contient une information concernant le nombre des blocs de données qui succèdent au signal de commande de données.

7. Procédé suivant l'une des revendications 1 à 6, caractérisé par le fait que le poste contrôle l'état de fonctionnement de postes, qui lui sont raccordés, du plan inférieur ou des générateurs de données, et que les données obtenues au moyen du poste et devant être transmises, sont des signaux d'état et des données des postes contrôlés par ce poste.

8. Procédé suivant la revendication 7, caractérisé par le fait que des blocs de données émis par un poste contiennent, à la suite de l'adresse du poste concerné, deux parties, dont l'une contient un signal d'état et dont l'autre contient des données transférées pour leur transmission, et que pour les deux parties du bloc de données, il est prévu respectivement un signal de commande et un bloc de quantités partielles adressées.

9. Procédé suivant la revendication 8, caractérisé par le fait que, dans le cas d'un dispositif de transmission de données qui possède une structure arborescente et dans lequel des postes d'un plan du réseau sont raccordés à plusieurs postes d'un plan inférieur du réseau et dans lequel il est prévu au moins un plan supérieur du réseau comportant au moins un autre poste, des blocs de données émis par les postes du plan supérieur du réseau contiennent respectivement l'adresse du poste émetteur, un signal de commande d'état auquel est associé un bloc de données d'état, qui est rapporté aux postes directement contrôlés par ledit poste, et une suite de blocs de données successifs des postes du plan immédiatement inférieur du réseau.

10. Procédé suivant l'une des revendications 1 à 9, caractérisé par le fait que les données sont transmises par l'intermédiaire d'un réseau de données possédant une structure arborescente et aux noeuds duquel est disposé respectivement un poste agencé pour le fonctionnement en semi-duplex, et au niveau de la tête duquel est disposé un poste central comportant un ordinateur.

11. Procédé suivant l'une des revendications 1 à 10, caractérisé par une détermination locale de signalisation de défauts et/ou de perturbations dans un dispositif permettant l'observation centrale du fonctionnement de dispositifs de transmission de données.

# FIG 1

FIG 2

FIG 3

| Adresse S1 | 1. Datenbyte | 2. Datenbyte |
|---|---|---|

| 3. Datenbyte | 4. Datenbyte |
|---|---|

| (n−1). Datenbyte | n. Datenbyte |
|---|---|

z.B. $n \leq 32$

FIG 4

| Adresse S1 | Datensteuerbyte 1 | Unteradresse 1 | 1. Datenbyte | 2. Datenbyte |
|---|---|---|---|---|

| Unteradresse 2 | 3. Datenbyte | 4. Datenbyte |
|---|---|---|

| Unteradresse m | (n−1). Datenbyte | n. Datenbyte |
|---|---|---|

z.B. $m \leq 16$ $n \leq 32$

FIG 5

| Adresse S2 | Datensteuerbyte 2 | Adresse S1(1) | Datensteuerbyte 1 | Datenblock Adr. S1(1) |
|---|---|---|---|---|

| Adresse S1(2) | Datensteuerbyte 1 | Datenblock Adr. S1(2) |
|---|---|---|

| Adresse S1(m) | Datensteuerbyte 1 | Datenblock Adr. S1(n) |
|---|---|---|

z.B. $n \leq 120$

EP 0 177 018 B1

FIG 6

| Adresse S3 | Datensteuerbyte 3 | Adresse S2(1) | Datensteuerbyte 2 | Adresse S1(1) | Datensteuerbyte 1 | Datenblock S1(1) |

| Adresse S1(2) | Datensteuerbyte 1 | Datenblock S1(2) |

| Adresse S1(n) | Datensteuerbyte 1 | Datenblock S1(n) |

| Adresse S2(2) | Datensteuerbyte 2 | Adresse S1(1) | Datensteuerbyte 1 | Datenblock S1(1) |

| Adresse S1(2) | Datensteuerbyte 1 | Datenblock S1(2) |

| Adresse S1(n) | Datensteuerbyte 1 | Datenblock S1(n) |

| Adresse S2(m) | Datensteuerbyte 2 | Adresse S1(1) | Datensteuerbyte 1 | Datenblock S1(1) |

| Adresse S1(2) | Datensteuerbyte 1 | Datenblock S1(2) |

$m \leq 120$
$n \leq 120$

| Adresse S1(n) | Datensteuerbyte 1 | Datenblock S1(n) |

EP 0 177 018 B1

FIG 7

| Adresse S2 | Statussteuerbyte S1 | Statusadresse 1 | 1. Statusbyte S1 | 2. Statusbyte S1 |
| --- | --- | --- | --- | --- |
| | | Statusadresse 2 | 3. Statusbyte S1 | 4. Statusbyte S1 |
| | | Statusadresse x | (y-1). Statusbyte S1 | y. Statusbyte S1 |

| Adresse S1(1) | Statussteuerbyte S0 | Statusadresse 1 | 1. Statusbyte S0 | 2. Statusbyte S0 |
| --- | --- | --- | --- | --- |
| | | Statusadresse 2 | 3. Statusbyte S0 | 4. Statusbyte S0 |
| | | Statusadresse x | (y-1). Statusbyte S0 | y. Statusbyte S0 |
| | | Adresse S1(1) | Datensteuerbyte S0 | Datenblock S0 |

| Adresse S1 (n) | Statussteuerbyte S0 | Statusadresse 1 | 1. Statusbyte S0 | 2. Statusbyte S0 |
| --- | --- | --- | --- | --- |
| | | Statusadresse 2 | 3. Statusbyte S0 | 4. Statusbyte S0 |
| | | Statusadresse x | (y-1). Statusbyte S0 | y. Statusbyte S0 |
| | | Adresse S1 (n) | Datensteuerbyte S0 | Datenblock S0 |

EP 0 177 018 B1